# DEMANDE DE BREVET EUROPEEN

(11) **EP 2 133 852 A1**
(43) Date de publication de la demande: **16.12.2009**
(21) Numéro de dépôt: 09162636.6
(22) Date de dépôt: 12.06.2009
(51) Int. Cl.: G09B 5/04, G07F 17/16

(54) **Système d'audioguidage pour visiter des sites de présentation d'objets, comprenant des appareils audioguides.**

(30) Priorité: 13.06.2008 FR 0853951
(71) Demandeur: Société des Contenus Culturels et Touristiques, 92210 Saint Cloud (FR)
(72) Inventeur: Lombard, Didier, Lucien, 92500 Rueil Malmaison (FR)
(74) Mandataire: Berger, Helmut

(57) **Abrégé**

L'invention concerne un système d'audioguidage pour visiteurs de sites d'objets au sujet desquels les visiteurs souhaitent avoir des commentaires, tels que des musées ou lieux d'expositions d'objets.

Le système est du type comprenant un dispositif de mise à disposition d'appareils audioguides portables, individuellement des visiteurs, un appareil comprenant un boîtier (1) enfermant les moyens électroniques de mémoire de stockage des données relatives aux commentaires et un dispositif écouteur (2). Le système est **caractérisé en ce que** l'appareil est du type jetable, d'un faible prix de revient et comprend un boîtier (1) en matière plastique présentant une longueur et une largeur similaires à celles d'une carte bancaire et une faible épaisseur.

L'invention est utilisable pour des visites individuelles commentées de sites tels que des musées.

## Description

L'invention concerne un système d'audioguidage pour visiteurs de sites d'exposition d'objets au sujet desquels les visiteurs souhaitent avoir des commentaires, tels que des musées ou lieux d'expositions d'objets, du type comprenant un dispositif de mise à disposition d'appareils audioguides portables, individuellement des visiteurs, un appareil comprenant un boîtier enfermant les moyens électroniques de mémoire de stockage des données relatives aux commentaires et un dispositif écouteur. L'invention concerne également l'appareil audioguide.

Les systèmes de ce type, qui sont connus, prévoient que chaque visiteur loue un appareil audioguide défini ci-dessus en déposant une pièce de caution. Après la restitution de l'appareil, celui-ci est nettoyé pour être prêt pour une nouvelle location et un nouvel usage.

Les systèmes connus présentent de nombreux inconvénients majeurs. La location des appareils audioguides impose une gestion rigoureuse avec un comptoir, impliquant le dépôt des pièces de caution, telles que cartes d'identités, passeports ou analogues et un processus de récupération des appareils et des pièces de caution, avec des risques de perte. Les appareils défaillants doivent être souvent réparés à l'extérieur du site, la gestion du service après-vente est lourde mais indispensable. Les batteries de ces appareils doivent être chargées dans des supports volumineux et l'installation de ces supports engendre des contraintes physiques et électriques pour les sites culturels. La réutilisation permanente des appareils, avec leur dispositif écouteur pose un grave problème d'hygiène. Il s'est avéré que les appareils et les casques écouteurs ne sont pas nettoyés après chaque usage ou le nettoyage est insuffisant. Enfin, les exigences quant à la gestion impliquant la mise à disposition de personnels compétents, n'est rentable que pour les très grands sites, dotés d'un espace pour une installation de comptoir de distribution et de locaux techniques appropriés. A ces inconvénients s'ajoute que les audioguides connus sont attachés aux sites qui les louent et ne contiennent donc que des contenus concernant ce site.

L'invention a pour but de pallier ces inconvénients.

Pour atteindre ce but, le système selon l'invention est caractérisé en ce que l'appareil est du type jetable, d'un faible prix de revient et comprend un boîtier en matière plastique, présentant une longueur et une largeur similaires à celles d'une carte bancaire, et une faible épaisseur.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue éclatée et en perspective d'un appareil selon la présente invention ;
- la figure 2 est une vue synoptique fonctionnelle de l'appareil selon l'invention ; et
- la figure 3 illustre le fonctionnement de l'appareil sous forme d'un organigramme.

Le système d'audioguidage selon l'invention pour visiteurs de sites comportant des objets à propos desquels les visiteurs souhaitent avoir des commentaires, individuellement, tels que des musées ou lieux d'expositions d'objets, tient à la disposition de chaque visiteur désireux d'avoir des commentaires un appareil audioguide portable du type jetable et donc d'un faible prix de revient. Pour disposer de cet appareil pendant la visite du site, le visiteur doit l'acheter contre paiement d'un prix modéré correspondant sensiblement au prix de location des appareils audioguides des systèmes connus. Etant devenu propriétaire de l'appareil, le visiteur peut en disposer à sa guise, le jeter après usage ou bien le garder, le cas échéant pour une deuxième visite. Comme il sera expliqué plus loin, il est également prévu que l'appareil puisse être rechargé en d'autres contenus pour d'autres sujets ou expositions. A cette fin, des distributeurs de contenus pourraient être prévus sur les sites à visiter ou à autres lieux appropriés. Les distributeurs pourraient être réalisés sous forme de bornes.

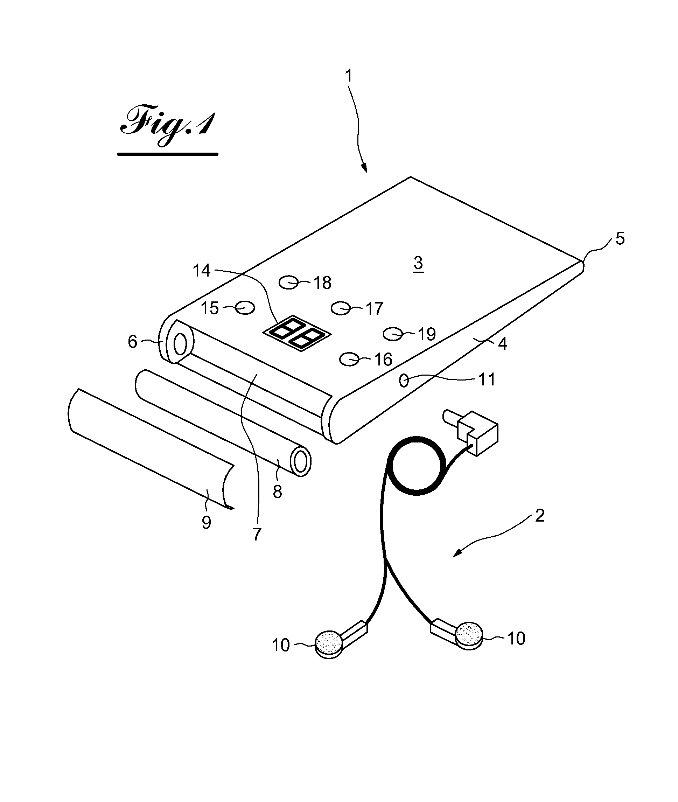

L'appareil audioguide selon l'invention comprend, comme le montre la figure 1, un boîtier 1 enfermant un dispositif électronique de stockage et de lecture des données relatives aux commentaires à donner aux visiteurs et un dispositif écouteur 2 amoviblement raccordable au boîtier.

Le boîtier 1 est réalisé en matière plastique qui présente une face de dessus 3 de forme rectangulaire. Les faces latérales 4 sont effilées, la hauteur ou épaisseur augmentant progressivement de la face frontale d'extrémité inférieure 5 à la face frontale d'extrémité supérieure 6. Le boîtier a une longueur et une largeur similaires à celles d'une carte bancaire. Il est de faible épaisseur et est léger. Son poids est par exemple de 40 grammes.

Le boîtier comprend au niveau de son extrémité supérieure 6 plus épaisse un compartiment de logement 7 d'une pile électrique 8, avantageusement d'une pile électrique standard, telle qu'une pile alcaline du type AAA 1,5 volts. Cette pile constitue la source d'alimentation électrique des différents composants électriques et électroniques enfermés dans le boîtier. Le logement 7 est susceptible d'être fermé par un couvercle 9.

Le dispositif écouteur 2 est du type à oreillette 10 susceptible d'être raccordé amoviblement au boîtier 1 qui comporte, à cette fin, dans une de ses parois latérales 4, une prise de sortie écouteur 11, par exemple du type connu sous la dénomination jack. Le boîtier 1 peut être pourvu d'une dragonne non représentée dont un oeillet de fixation pourrait être prévu sur la face latérale inférieure 5.

Le boîtier 1 comporte sur sa face supérieure principale 3, près de son extrémité supérieure 9 plus épaisse un petit écran afficheur numérique 14 à par exemple deux chiffres binaires et cinq touches de commande réalisées avantageusement sous forme de zones tactiles circulaires. Ces chiffres servent de repères visuels concernant les fichiers devant être lus ou en cours de lecture. Deux touches 15 et 16 sont disposées à droite et à gauche de l'afficheur 14 et constituent respectivement des moyens de commande de la marche avant et arrière de lecture. Trois touches sont disposées en dessous de l'afficheur. La touche centrale 17 constitue l'organe de commande "lecture/pause" et "marche/arrêt". La fonction "lecture/pause" est sélectionnée par une pression relativement brève sur la touche, tandis que les fonctions "marche/arrêt" sont activées en réponse à une pression plus longue sur cette touche.

Les deux touches à droite et à gauche de la touche centrale 17, notées 18 et 19, constituent des organes de commande de l'augmentation et de la diminution du volume sonore du dispositif écouteur.

Une fonction automatique d'extinction de l'appareil est intégrée, en cas de non utilisation de l'appareil pendant dix minutes. Durant la lecture d'une plage, un point rouge clignote sur l'afficheur 11, à droite des deux chiffres binaires.

L'invention pourrait prévoir à la fin d'une phase d'utilisation seulement une mise en veille du microcontrôleur, après l'arrêt de tous les autres composants consommateurs d'énergie électrique, mais également un arrêt total de tous les composants, le microcontrôleur inclus. A cette fin l'appareil pourrait comporter, sur l'un des côtés latéraux du boîtier, un commutateur de mise en service/hors service approprié.

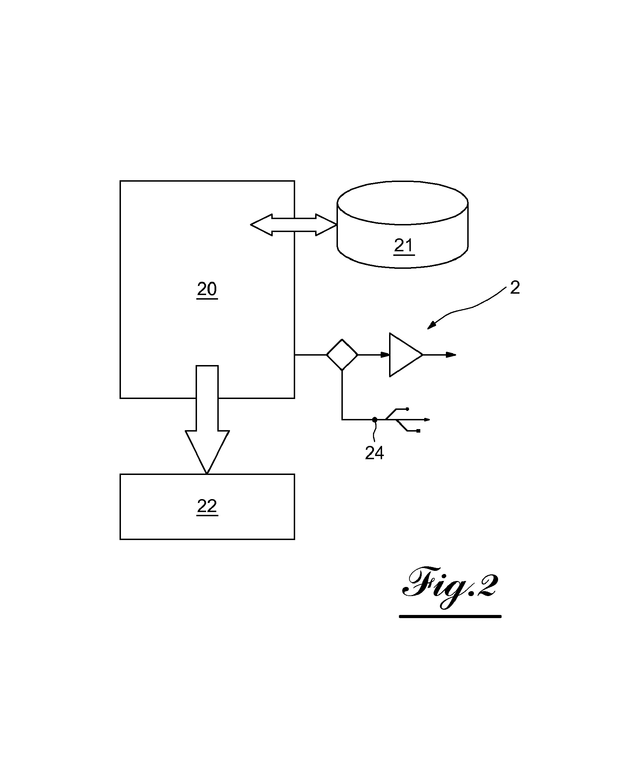

Comme le montre le schéma de la figure 2, le boîtier 1 enferme un dispositif électronique qui comporte essentiellement un microcontrôleur 20 intégrant une fonction de compression et de décompression des données, connues sous le terme CODEC. Les fichiers compressés avantageusement du format connu sous la dénomination OGG ou encore MP3 et WMA sont stockés dans une mémoire 21 du type connu sous la dénomination flash. Le microcontrôleur 20 coopère avec le dispositif de commande 22 comprenant l'afficheur à deux chiffres binaires 14 et les cinq touches de commande 15 à 19. La figure 2 montre également le dispositif écouteur 2 qui est destiné à être raccordé à la sortie écouteur 11. Cette sortie pourrait également être l'entrée pour le rechargement de la mémoire en nouveaux contenus audio, ce connecteur ayant la référence 24.

Concernant la mémoire 21, sa taille pourrait être de 128 ou 256 mégaoctets disponible dans le commerce et pourrait évoluer en fonction de l'évolution des mémoires. Le débit utilisable pourrait varier de 16 à 190 kb/s, la sortie écouteur pourrait être une prise telle que celle connue sous le terme jack d'un diamètre 3,5 millimètres ou 2,5 millimètres.

On décrira ci-après le fonctionnement d'un système audioguide selon l'invention.

Si une personne qui souhaite faire une visite individuelle commentée d'un site tel qu'un musée équipé d'un système selon l'invention, il suffit à ce visiteur d'acheter un appareil audioguide selon l'invention, soit au site même, soit à un autre endroit approprié. Cet appareil comporte donc le boîtier 1 et le dispositif écouteur 2 à oreillettes 10 qui est neuf.

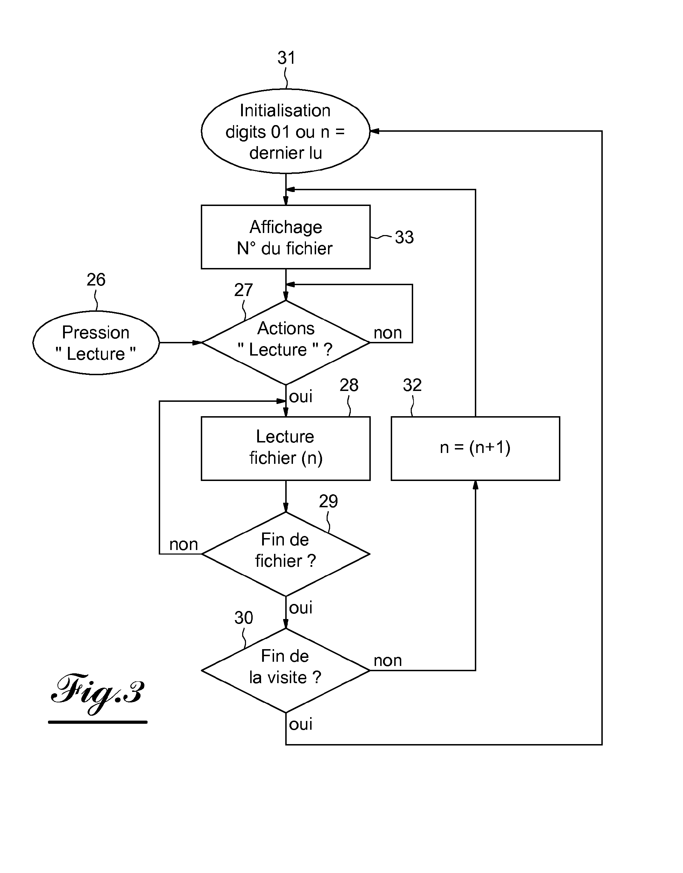

Après avoir branché le dispositif écouteur 2 à oreillettes à la sortie écouteur 11, la mise en route de l'appareil se fait par appui pendant quelques secondes sur la touche "lecture/pause" 17. Les différentes étapes du fonctionnement de l'appareil sont illustrées à la figure 3. Le schéma montre que, suite à l'action de commande de la fonction lecture illustrée par la case 27, en réponse à l'actionnement de la touche 17 en 26, l'écran de l'afficheur 11 affiche le numéro n d'un commentaire comme cela indique la case 28. Si l'appareil est neuf, c'est-à-dire qu'il n'y a pas eu de lecture auparavant, le commentaire qui sera lu sera celui auquel le numéro 1 a été attribué. Si le lecteur a déjà été actionné avant et seulement éteint en cours d'utilisation, la lecture reprendra à l'endroit du commentaire de la dernière utilisation ou avantageusement à la piste suivante. Selon le logiciel illustré à la figure 3, le fichier de commentaire affiché sur l'écran 14 sera lu tout en vérifiant s'il y a fin de fichier ou non. Cette opération est illustrée à la figure 3 par la case 29. Lorsqu'il y a fin de fichier, et si cette fin de fichier coïncide avec la fin du commentaire prévu pour la visite, illustrée par la case 30, on revient à l'état initialisation 31 où n est dernier fichier qui a été lu. Si la fin de la lecture du fichier n ne coïncide pas avec la fin du ou des commentaires, on effectuera la prochaine fois la lecture du fichier n+1 avec affichage sur l'écran 14 de l'afficheur du numéro de fichier n+1, comme cela est illustré par les cases 32 et 33. Il est à noter qu'à la fin de chaque piste, l'appareil s'arrête automatiquement permettant donc à l'utilisateur de se déplacer vers le prochain objet destiné à être commenté.

Une commande "pause" par une pression brève sur la touche 15 provoque une interruption de la lecture. Les actions sur les touches "avant" ou "arrière" 15 ou 16 permettent de naviguer et de lire d'autres fichiers.

Après la fin de la visite, le visiteur qui à l'achat de l'appareil était devenu propriétaire de celui-ci peut jeter cet appareil ou le conserver pour une autre utilisation. Il est à noter que l'appareil n'a pas besoin d'être restitué au musée. Par conséquent, le musée ne peut pas le réutiliser et le louer à un autre visiteur. Ainsi, les opérations complexes de gestion des appareils et de nettoyage de ceux-ci, conformément aux systèmes connus, peuvent être supprimées. Le système selon l'invention peut donc être prévu dans n'importe quel site d'exposition, grand ou petit, parce que ce système ne nécessite aucune infrastructure particulière.

Comme cela a déjà été invoqué plus haut, l'invention prévoit la possibilité, pour des audioguides destinés aux visites multiples, de charger l'appareil en nouveaux contenus par le visiteur même, soit à l'arrivée sur le site à un distributeur de contenus, soit par téléchargement, avant la visite, le cas échéant, à partir du réseau Internet si celui-ci est organisé de façon à constituer une source de téléchargement des commentaires appropriés. Ceci présente l'avantage que l'utilisateur peut effectuer le chargement à n'importe quel lieu et moment qui lui conviennent. Le rechargement se fait par la prise de sortie écouteur 11. L'appareil comporte à cette fin un circuit qui détecte s'il s'agit d'un branchement au dispositif écouteur 2 ou d'un dispositif de rechargement pour que l'appareil se comporte comme une clé USB.

Etant donné que les visiteurs achètent l'appareil audioguide, celui-ci n'est donc plus attaché à un site et peut ainsi contenir des programmes de commentaires de plusieurs sites.

Bien entendu, les appareils audioguides pourraient être vendus aux visiteurs à l'état vierge pour être chargés ensuite par les visiteurs en les branchant sur un dispositif distributeur.

L'appareil pourrait aussi être muni en option d'un récepteur de localisation de type par exemple connu sous la dénomination GPS pour permettre les sorties extérieures. On pourrait également prévoir une alimentation par des petits panneaux solaires fixés sur le boîtier, ce qui permettrait le remplacement de la pile alcaline par un accumulateur. L'absence d'un clavier numérique procure suffisamment de place pour un dispositif photovoltaïque.

Il ressort de la description qui vient d'être faite que le système selon l'invention, à l'inverse des systèmes connus utilisant des audioguides conventionnels loués, grâce à son appareil audioguide jetable mais réutilisable, doté d'écouteurs stéréo neufs, permet de supprimer le problème délicat de l'hygiène des appareils conventionnels loués.

Il est à noter que l'appareil selon l'invention est réutilisable, tout en étant jetable du fait de son faible prix de revient. Il est conçu pour assurer une très bonne qualité de reproduction des commentaires et d'une grande capacité de stockage. Il offre un grand confort d'utilisation, comparable, sinon supérieur au confort fourni par des appareils standards loués par des musées. De plus, il offre une grande facilité de chargement sélectif individuel, le cas échéant en coopération avec un ordinateur fixe programmé de façon appropriée et dont l'utilisateur pourrait disposer lui-même ou auquel il pourrait au moins avoir accès. Pour ne pas poser un problème environnemental, lorsqu'il est jeté, le boîtier pourrait être réalisé en PLA, c'est-à-dire en acide polylactique, qui est un produit biodégradable.

## Revendications

1. Système d'audioguidage pour visiteurs de sites d'exposition d'objets au sujet desquels les visiteurs souhaitent avoir des commentaires, tels que des musées ou lieux d'expositions d'objets, du type comprenant un dispositif de mise à disposition d'appareils audioguides portables, individuellement des visiteurs, un appareil comprenant un boîtier enfermant les moyens électriques de mémoire de stockage des données relatives aux commentaires et un dispositif écouteur, **caractérisé en ce que** le boîtier (1) comporte un écran d'affichage numérique (14) des numéros de données de commentaires contenus dans les moyens de mémoire de stockage, et des touches (15 à 19) de commande de l'appareil, réalisé sous forme de zones tactiles, dont deux touches de commande de la marche avant/arrière (15, 16) des moyens de lecture des données de commentaires et **en ce que** le dispositif électronique comporte une mémoire avantageusement de type flash (22), le boîtier (1) étant avantageusement en matière plastique et présentant une longueur et une largeur similaires à celles d'une carte bancaire et une faible épaisseur.

2. Système selon la revendication 1, **caractérisé en ce que** les touches de commande comprennent en outre une touche (17) de commande de fonction "lecture/pause" et "marche/arrêt", les fonctions "lecture/pause" étant sélectionnables par une pression relativement brève de la touche et les fonctions "marche/arrêt" par une pression plus longue sur cette touche.

3. Système une revendication 1 ou 2, **caractérisé en ce que** les touches de commande comportent deux touches (18, 19) de commande d'augmentation et de diminution du volume sonore du dispositif écouteur (2).

4. Système selon l'une des revendications 1 à 3, **caractérisé en ce que** l'écran d'affichage numérique (14) est un écran à deux chiffres binaires.

5. Système selon l'une des revendications 1 à 4, **caractérisé en ce que** l'appareil comporte une fonction d'extinction automatique en cas de non utilisation de l'appareil pendant une durée de temps prédéterminée.

6. Système selon l'une des revendications 1 à 5, **caractérisé en ce que** le dispositif électronique comporte un microcontrôleur (20) intégrant une fonction de compression et de décompression des données et une mémoire avantageusement du type flash (21).

7. Système selon l'une des revendications 1 à 6, **caractérisé en ce que** l'appareil comprend, à titre de source d'alimentation d'énergie électrique, une pile électrique standard (8) et un compartiment de logement (7) de la pile, au niveau de l'extrémité supérieure (6) du boîtier (1).

8. Système selon la revendication 7, **caractérisé en ce que** l'épaisseur maximale du boîtier est déterminée par le diamètre de la pile (8) et **en ce que** l'épaisseur diminue en direction de l'extrémité inférieure (5) du boîtier (1).

9. Système selon l'une des revendications 1 à 8, **caractérisé en ce qu'**il comprend des dispositifs de chargement ou rechargement de l'appareil en nouveaux contenus de données.

10. Système selon la revendication 9, **caractérisé en ce qu'**un dispositif de chargement ou rechargement est réalisé sous forme d'une borne ou à partir du réseau Internet.

11. Système selon la revendication 9 ou 10, **caractérisé en ce que** la prise de sortie (11) par le dispositif écouteur (2) prévue avantageusement dans une face latérale (4) du boîtier (1) constitue aussi l'entrée pour le chargement précité.

12. Système selon l'une des revendications 1 à 11, **caractérisé en ce que** l'appareil audioguide contient des commentaires concernant plusieurs sites différents.

13. Système selon l'une des revendications 1 à 12, **caractérisé en ce que** le dispositif de mise à disposition de l'appareil audioguide aux visiteurs est un dispositif de vente des appareils.

14. Appareil audioguide de type jetable selon l'une des revendications 1 à 13.
